# EUROPEAN PATENT SPECIFICATION

(11) **EP 3 955 790 B1**
(45) Date of publication and mention of the grant of the patent: **01.03.2023**
(21) Application number: 20725930.0
(22) Date of filing: 17.04.2020
(51) Int. Cl.: A47J 44/00, A47J 43/044, A47J 43/046, A47J 27/14, A47J 27/00, A47J 36/32

(54) **KITCHEN MACHINE WITH AUTOMATICALLY OPERATED DISPENSING MEANS**
KÜCHENMASCHINE MIT AUTOMATISCH BETRIEBENEN AUSGABEMITTELN
MACHINE DE CUISINE AVEC DES MOYENS DE DISTRIBUTION AUTOMATIQUES

(30) Priority: 18.04.2019 PT 2019115464; 23.04.2019 EP 19170505
(43) Date of publication of application: 23.02.2022
(73) Proprietor: Modelo Continente Hipermercados, S.A., 4464-503 Senhora da Hora (PT)
(72) Inventor: FARIA ROCHA, Duarte Nuno, 3800-423 Aveiro (PT)
(74) Representative: do Nascimento Gomes, Rui
(86) International application number: PCT/IB2020/053674
(87) International publication number: WO 2020/212942

(56) References cited:
- WO-A1-87/01021
- GB-A- 2 466 336
- US-A- 5 819 636
- US-A1- 2011 300 270
- US-A1- 2014 377 417
- US-A1- 2016 150 915
- US-B1- 6 539 841

## Description

### FIELD OF THE INVENTION

The present invention is enclosed in the area of kitchen machines, in particular kitchen machines which are electrically ran/operated, typically comprising a mixing cup in which automatic mixing actions are performed and operating with automatic cooking programs.

### PRIOR ART

Kitchen machine solutions comprising a mixing cup in which automatic mixing actions are performed and operating with automatic cooking programs are known in the art, such as the case of patent application EP3117750. Furthermore, such patent application discloses a kitchen machine which provides mixing and heating of food supplies placed by a user within the mixing cup, and provides several controllable parameters, such as the operation speed of the engine that provides rotation of the mixer, its direction of rotation or the heating temperature of the base of the mixing cup. Examples of other relevant disclosures in this field are as follows: US5819636, US6539841, US2016/150915, US2011/300270 and GB2466336.

Patent application WO1987001021 discloses a microcomputer-controlled, integrated cooking apparatus for automatically preparing culinary dishes. The constituent ingredients of a particular dish are loaded into a compartmentalized carousel, which is mounted on the cooking apparatus. The apparatus includes a memory for storing one or more recipe programs. The recipe program specifies schedules for dispensing the ingredients from the carousel into a cooking vessel, for heating the vessel (either covered or uncovered), and for stirring the contents of the vessel. These operations are performed automatically under control of the microcomputer. Despite the practical functionalities provided by such solution, it requires, as do all solutions known in the art, the presence of a user that initiates the operation of the machine.

In its turn, patent application US2014/377417 discloses an automated cooking system and method that provides a process for automatically dispensing at least one ingredient and cooking the at least one ingredient to form a predetermined meal. A Wi-Fi reception and a USB port allow the system to receive new recipes, and other cooking related commands, such as starting times for cooking operations. However, the possibility for the user to defining a starting time does not allow to achieve an efficiency in the context of future operating schedules of the kitchen machine as it does not guarantee that the selected cooking program will be completed at a desired time.

With the existing demand of less time required for a user to operate a kitchen machine, a need exists for a higher independence provided by such devices.

However, as in the case of the described solutions, none of the kitchen machines known in the art provides for the automatic and/or on demand initiation of its operation with a proper level of efficiency considering operating schedules made by a user.

The present solution innovatively solves such issues.

### SUMMARY OF THE INVENTION

It is an object of the present invention a kitchen machine which is electrically ran and comprises i) a mixing cup, ii) mixing means provided in the mixing cup, iii) at least one container suitable to contain food supplies and iv) dispensing means, the dispensing means and the mixing cup being such that the food supplies contained within the container are dispensable to the inside of the mixing cup under a dispensing command received by the kitchen machine. The inclusion of the controllable dispensing means in a kitchen machine provides for on-demand and/or remote initiation of a cooking procedure. Until the receipt of a dispensing command by the kitchen machine, the food supplies remain stored inside the container. Only after such command is received in the machine are the food supplies provided to the inside of the mixing cup, for subsequent preparation, by means of the dispensing action of the dispensing means. Preferably, the machine comprises more than one container. The issue of an on-demand initiation of a cooking procedure is even more relevant in such case, namely where each container may have a different food supply. In particular, the present invention is particularly relevant for a cooking program may only be useful where the mixing of ingredients - the food supplies - occurs at the time in which the actual cooking procedure is to be initiated.

Advantageously, the kitchen machine is further configured to, subsequently to the dispensing of food supplies from a container into the mixing cup, initiate a cooking program, preferably such cooking program comprising activation of the mixing means and/or heating means comprised by the kitchen machine for predefined periods of time. With the automatic initiation of a cooking program subsequently to the dispensing command and the actual dispensing, a cooking procedure is initiated (with the dispensing) and able to be performed and finished (with the cooking program).

The kitchen machine may further comprise a base structure to which the mixing cup is attachable, such base structure comprising motion transmitting means which, when the mixing cup is attached to the base, are able to provide motion to the mixing means. Typically, such motion transmitting means consist of a motor, preferably an electrical motor which provides velocity control.

It is also an object of the present invention a method for automating a cooking program in a kitchen machine wherein it is implemented by the kitchen machine of the present invention, in any of described embodiments of the kitchen machine, and comprising the steps of:
- issuing a dispensing command to the dispensing means, preferably the container of such dispensing means containing food supplies,
- under receipt of such command in the kitchen machine, dispensing, by the dispensing means, of the food supplies contained in the container into the mixing cup, through the outlet of the dispensing means and the opening of the mixing cup,
- initiating a cooking program in the kitchen machine, preferably such cooking program comprising activation of the mixing means and/or the heating means comprised by the mixing cup, for predefined periods of time.

Such method provides for the on-demand and/or remote initiation of a cooking procedure/program in a kitchen machine, in which the container is able to be previously prepared with food supplies. Preferably, the kitchen machine comprises more than one container, each container being able to be provided with a different food supply. As referred above for the kitchen machine, the issue of on-demand initiation of a cooking procedure is even more relevant in such case. The method of the present invention is implemented by the kitchen machine of the present invention, in any of the described embodiments of such machine.

### DESCRIPTION OF FIGURES

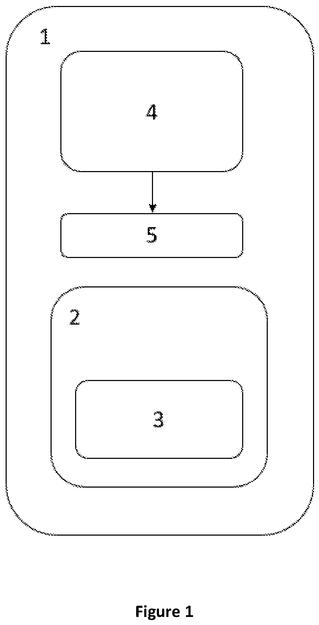

Figure 1- representation of an embodiment of the kitchen machine with automatically operated dispensing means developed, wherein the reference signs represent:
- 1 -: kitchen machine;
- 2 -: mixing cup;
- 3 -: mixing means;
- 4 -: container;
- 5 -: dispensing means.

### DETAILED DESCRIPTION

The more general and advantageous configurations of the present invention are described in the Summary of the invention. Such configurations are detailed below in accordance with other advantageous and/or preferred embodiments of implementation of the present invention.

In an inventive aspect of the kitchen machine of the present invention, it is configured so that the dispensing of food supplies from one container to the inside of the mixing cup is lagged in time from the dispensing of food supplies from at least one other container to the inside of the mixing cup. It thus provides of a pre-configured dispensing - and thus mixture - of ingredients (the food supplies) in the mixing cup.

In two alternative embodiments, the kitchen machine is configured so that food supplies contained in each container are dispensable to the inside of the mixing cup under i) a same dispensing command or ii) a dispensing command to each of the containers.

In an advantageous embodiment, the time in which a dispensing command is issued is dependent on the cooking program, in particular on the duration of the cooking program. Thus, such solution provides that, based on the duration of a cooking program, a desired finishing time may be set, since the issuing of the dispensing command is dependent on said duration. Thus, a more efficient solution is provided, one that avoids finishing a cooking program prior of after a desired time.

Furthermore, optionally and under the scope of the described kitchen machine, the dispensing command contains information on the time in which the dispensing of food supplies contained within the container to the inside of the mixing is performed. Thus, in such case the kitchen machine is further configured so that between the receipt of the dispensing command and the actual dispensing by the dispensing means, a time period is provided. It may be the case where a user remotely sends a dispensing command but does not wish the program to initiate immediately. Such time period may be dependent on the time that a user wishes to have a desired cooking program finished and the time that such cooking program lasts.

In another inventive aspect of the kitchen machine, a cooking program starts after a first dispensing of food supplies from a container to the inside of the mixing cup, preferably such cooking program comprising activation of the mixing means and/or the heating means for predefined periods of time. Thus, the cooking program may initiate, be it through heating, mixing or any other available means, after the dispensing of the food supplies of a first container. The particulars of heating, mixing or any other available means and the associated predefined periods of time are dependent on each cooking program. Thus, it may be that all food supplies / ingredients are dispensed subsequently into the mixing cup or that operations, such as heating, mixing or any other available means, each with an associated predefined period of time, separate the several dispensing actions.

In yet another innovative aspect of the kitchen machine of the present invention, the containers are radially arranged around an axle, the set of containers being rotatable around such axle, the dispensing of food supplies from one container to the inside of the mixing cup being obtained by rotation and alignment of such container with the outlet of the dispensing means. Thus, the dispensing means - in particular the several containers therein comprised - are efficiently arranged in a rotational structure, around an axle, thereby efficiently providing the dispensing of each food supply into the mixing cup, in a compact manner.

Optionally, the kitchen machine further comprises a controllable gate arranged between the container and an outlet of the dispensing means, such controllable gate being able to open under receipt of said dispensing command, thereby providing said dispensing of food supplies to the inside of the mixing cup through an opening formed in the mixing cup.

In an embodiment providing higher closure efficiency, the mixing cup comprises a cover, such cover having the referred opening. Optionally, the cover further comprises an openable inlet, such inlet covering the opening formed in the cover and, when open, providing access between the outlet of the dispensing means and the opening of the cover.

Preferably, the kitchen machine comprises heating means, optionally provided in a base of the mixing cup.

The cooking program may start automatically or under receipt of a specific message. Specifically, the cooking program may be initiated:
- only under receipt of a subsequent command by the kitchen machine, such subsequent command consisting of a cooking program initiation command, or
- automatically.

In an advantageous embodiment, the dispensing means further comprise cooling means, the cooling means being so arranged that provide refrigeration of the container. Thus, maintenance of the conservation of the food supplies until the issue of the dispensing command is provided.

Preferably, the kitchen machine further comprises communication means, the communication means being configured to receive a remote message containing the dispensing command, the communication means preferably being wireless, more preferably a local area wireless network or a cellular network.

In an optional and alternative embodiment, the machine is further configured with a timer, such timer being able to be pre-set with a time limit and, under expiry of such time limit, the machine being further configured to issue the dispensing command, the machine further comprising a microcontroller which in turn comprises the timer.

Optionally, the mixing cup may have a substantially cylindrical or substantially tall truncated cone shape.

In an embodiment of the kitchen machine of the present invention, it comprises a mixing cup provided with mixing means and with heating means, the heating means being arranged in the base of the mixing cup. Both the heating means and the mixing means are electrically put into action - electrically operated. The mixing means typically consist of a mixer/stirrer, which provides stirring of ingredients inside the mixing cup or of a cutter - typically comprising a set of blades - which provides cutting of ingredients inside the mixing cup. Typically, the stirrer and the cutter are interchangeable.

The kitchen machine further comprises a base structure to which the mixing cup is attachable, such base structure comprising motion transmitting means which, when the mixing cup is attached to the base, are able to provide motion to the mixing means. Such motion transmitting means consist of an electric motor.

The kitchen machine enables the automatic preparation of food by means of automatic cooking programs with which it is configured, each cooking program comprising the activation of the mixing means and/or heating means for predefined periods of time. For instance, to the preparation of a simple recipe such as whipped cream may correspond the cooking program of - after the placing of cream inside the mixing cup, a mixer being provided inside the mixing cup - the activation of the mixing means/mixer for 2 minutes at a predefined speed of rotation of the mixer. More complex recipes/cooking programs will comprise several stages of activation and configuration of the mixing means and the heating means.

Furthermore, in such embodiment the kitchen machine comprises communication means, which typically comprise a Wi-Fi communication controller or a GPRS communication controller. Other wireless communication protocols are also suitable, as well as cabled communication protocols, such as Ethernet. However, for a higher portability of the kitchen machine, wireless protocols are preferred.

A message may be sent through a network - typically it is sent through the Internet - for instance from a device which is remote to the kitchen machine. Such remote device typically consists of a cell phone, configured with a computer program - an app - which provides the issue of messages to the kitchen machine. The addressing of a specific kitchen machine from the app may be provided, for instance under a unique ID of the kitchen machine.

The message may thus be routed through one or more servers. One or more of the servers may even be configured to provide control or register roles, such as registering the issue of a dispensing command from the app to the kitchen machine, and route the command only at the time that the user desires the dispensing command to be issued.

Such message, under the scope of the present invention will contain a dispensing command. Under the receipt of the dispensing command, the kitchen machine will provide the dispensing of food supplies to the inside of the mixing cup.

Thus, a user, which is remotely to the machine, may remotely instruct it to start a cooking program, provided that food supplies have been placed in one or more containers. The user of the remote device would have placed the food supplies inside the containers in advance.

The kitchen machine comprises dispensing means, which are provided with one or more containers - typically more than one, to allow the preparation of complex recipes. The kitchen machine is configured so that the dispensing of food supplies from one container to the inside of the mixing cup is lagged in time from the dispensing of food supplies from at least one other container to the inside of the mixing cup, so allowing the ingredients/food supplies inside the containers to be dispensed to the inside of the mixing cup according to a cooking program, thus providing a recipe.

Furthermore, the initiation of the dispensing/cooking program may also be provided with a predefined time of start. For instance, the user may, at 12:00, configure the machine to have a cooking program finished at 20:00. If such cooking program takes 30 min to be prepared, the machine would then initiate the dispensing, thus internally issuing the dispensing command, at 19:30. The dispensing command thus contains information on the time in which the dispensing of food supplies contained within the container to the inside of the mixing cup is performed. Furthermore, the kitchen machine is provided with a timer, such timer being pre-set with a time limit (19:30) and, under expiry of such time limit, the machine issuing the dispensing command.

With regard to the physical construction of the machine, a controllable gate is arranged between an outlet of the dispensing means and an opening formed in the mixing cup, such controllable gate being able to open under receipt of the dispensing command, thereby providing the dispensing of food supplies to the inside of the mixing cup. The kitchen machine may comprise a single outlet, and a controllable gate for each one of the containers.

In such embodiment, the mixing cup comprises a cover, the cover having the referred opening and an openable inlet - such as a lid -, the lid covering the opening formed in the cover and, when open, providing access between the outlet of the dispensing means and the opening of the cover.

Thus, the dispensing means comprise an axle around which the several containers are radially arranged, the set of containers being rotatable around such axle, the dispensing of food supplies from one container to the inside of the mixing cup being obtained by rotation and alignment of such container with the outlet of the dispensing means. The mixing cup may have a substantially cylindrical shape, the cover thus having a circular section. The opening is centrally formed in such circular section. The dispensing means may also have a substantially cylindrical shape, the outlet being also centrally provided in a lower base, and thus easy to couple to the opening of the cover.

Under the issue of the dispensing command and provided the lag in time for the dispensing of the several containers and food supplies contained therein, the several controllable gates will open and allow the food supplies/ingredients to be dispensed to the inside of the mixing cup.

Thus, and under the provision of a cooking program which corresponds to a recipe, such recipe may be automatically prepared, with the sequential dispensing of food supplies / ingredients from the several containers.

Moreover, and in order to enable the storage of food supplies with higher perishable properties, cooling means are provided, arranged in such a way that provide refrigeration of each container.

The cooling means may thus be displaced in such a way that cover at least a larger outer surface of the container, or be provided within the container.

As referred, the kitchen machine - including all of its several described components - is electrically powered, be it through a mains power supply or energy storage means, such as a battery.

As will be clear to one skilled in the art, the present invention should not be limited to the embodiments described herein, and a number of changes are possible which remain within the scope of the claims.

## Claims

1. Kitchen machine (1) which is electrically ran and comprises i) a mixing cup (2), ii) mixing means (3) provided in the mixing cup (2), iii) at least one container (4) suitable to contain food supplies, iv) dispensing means (5) and a v) microcontroller comprising a timer,
wherein,
the dispensing means (5) and the mixing cup (2) being such that the food supplies contained within the container (4) are dispensable to the inside of the mixing cup (2) under a dispensing command received by the kitchen machine (1);
the dispensing command comprises information on a time limit in which the dispensing of food supplies to the inside of the mixing cup (2) is to be performed according to a cooking program; the kitchen machine (1) being configured to issue the dispensing command under expiry of such time limit; and wherein,
the time limit being programmed on the timer and is computed by the microcontroller based on the cooking program finishing time set by a user and on the duration of said cooking program.

2. Kitchen machine (1) according to the previous claim wherein it comprises more than one container (4).

3. Kitchen machine (1) according to any of the preceding claims wherein it is configured to, subsequently to the dispensing of food supplies from a container (4) into the mixing cup (2), initiate a cooking program, preferably such cooking program comprising activation of mixing means (3) and/or heating means for predefined periods of time.

4. Kitchen machine (1) according to any of the claims 2-3, wherein it is further configured so that the dispensing of food supplies from one container (4) to the inside of the mixing cup (2) is lagged in time from the dispensing of food supplies from at least one other container (4) to the inside of the mixing cup (2).

5. Kitchen machine (1) according to the previous claim wherein a cooking program starts after a first dispensing of food supplies from a container (4) to the inside of the mixing cup (2), preferably such cooking program comprising activation of the mixing means (3) and/or the heating means for predefined periods of time.

6. Kitchen machine (1) according to any of the claims 4-5 wherein the dispensing means (5) further comprise an axle around which the containers (4) are radially arranged, the set of containers (4) being rotatable around such axle, the dispensing of food supplies from one container (4) to the inside of the mixing cup (2) being obtained by rotation and alignment of such container (4) with the outlet of the dispensing means (5).

7. Kitchen machine (1) according to any of the preceding claims wherein it further comprises a controllable gate arranged between the container (4) and an outlet of the dispensing means (5), such controllable gate being able to open under receipt of said dispensing command, thereby providing said dispensing of food supplies to the inside of the mixing cup (2) through an opening provided in the mixing cup (2).

8. Kitchen machine (1) according to any of the preceding claims wherein the mixing cup (2) comprises a cover, such cover having the referred opening and, preferably, the cover further comprises an openable inlet, such inlet covering the opening formed in the cover and, when open, providing access between the outlet of the dispensing means (5) and the opening of the cover.

9. Kitchen machine (1) according to any of the preceding claims wherein it further comprises heating means, preferably provided in a base of the mixing cup (2).

10. Kitchen machine (1) according to any of the claims 3-9 wherein said cooking program is initiated:
- only under receipt of a subsequent command by the kitchen machine (1), such subsequent command consisting of a cooking program initiation command, or
- automatically.

11. Kitchen machine (1) according to any of the preceding claims wherein it further comprises cooling means, the cooling means being so arranged that provide refrigeration of each container (4).

12. Kitchen machine (1) according to any of the preceding claims wherein it further comprises communication means, the communication means being configured to receive a remote message containing the dispensing command (5), the communication means preferably being wireless, more preferably a local area wireless network or a cellular network.

13. Method for automating a cooking program in a kitchen machine (1) wherein it is implemented by the kitchen machine (1) of any of the preceding claims, and comprising the steps of:
- issuing a dispensing command to the dispensing means (5); said dispensing command comprising information on a time limit based on a cooking program finishing time and on the duration of said cooking program;
- under receipt of such command in the kitchen machine (1), and under expiry of such time limit, dispensing, by the dispensing means (5), of the food supplies contained in the container (4) into the mixing cup (2), through the outlet of the dispensing means (5) and the opening of the mixing cup (2),
- initiating a cooking program in the kitchen machine (1), preferably such cooking program comprising activation of the mixing means (3) and/or the heating means comprised by the mixing cup (2), for predefined periods of time,
preferably, the kitchen machine (1) comprising more than one container (4), each container (4) having a different food supply.

## Patentansprüche

1. Küchenmaschine (1), die elektrisch betrieben wird, und folgendes umfasst: i) einen Mischbecher (2), ii) eine Mischeinrichtung (3) in dem Mischbecher (2) vorgesehen, iii) mindestens einen Behälter (4), geeignet für das Aufbewahren von Lebensmittel, iv) Ausgabemittel (5) und einen v) Mikrocontroller mit einem Timer,
worin,
die Ausgabemittel (5) und der Mischbecher (2) so beschaffen sind, dass die in dem Behälter (4) enthaltenen Lebensmittel in den Mischbecher (2), durch einen Ausgabebefehl, der von der Küchenmaschine (1) empfangen wird, ausgegeben werden können;
der Ausgabebefehl enthält Informationen über eine Frist, innerhalb welcher, nach einem Kochprogramm, die Ausgabe von Lebensmitteln in den Mischbecher (2) erfolgen soll; die Küchenmaschine (1) ist so konfiguriert, dass der Ausgabebefehl unter Ablauf dieser Frist ausgestellt wird; und worin,
die Frist auf dem Timer programmiert und vom Mikrocontroller auf der Grundlage der von einem Benutzer eingestellten Endzeit des Kochprogramms und der Dauer des genannten Kochprogramms berechnet wird.

2. Küchenmaschine (1) nach vorherigem Anspruch, worin diese mehr als einen Behälter (4) umfasst.

3. Küchenmaschine (1) nach jedem der vorherigen Ansprüche, worin diese so konfiguriert ist, dass nach der Ausgabe von Lebensmitteln aus einem Behälter (4) in den Mischbecher (2), ein Kochprogramm initiiert wird, vorzugsweise umfasst ein solches Kochprogramm die Aktivierung der Mischeinrichtung (3) und/oder der Heizmittel für vordefinierte Zeiträume.

4. Küchenmaschine (1) nach jedem der Ansprüche 2-3, worin diese weiterhin so konfiguriert ist, dass die Ausgabe von Lebensmitteln aus einem Behälter (4) in den Mischbecher (2) gegenüber der Ausgabe von Lebensmitteln von mindestens einem Behälter (4) in den Mischbecher (2) zeitlich verzögert ist.

5. Küchenmaschine (1) nach vorherigem Anspruch, worin ein Kochprogramm nach einer ersten Ausgabe von Lebensmitteln aus einem Behälter (4) in den Mischbecher (2) initiiert wird, vorzugsweise umfasst ein solches Kochprogramm die Aktivierung der Mischeinrichtung (3) und/oder der Heizmittel für vordefinierte Zeiträume.

6. Küchenmaschine (1) nach jedem der Ansprüche 4-5, worin die Ausgabemittel (5) weiterhin eine Achse, um die die Behälter (4) radial angeordnet sind, umfasst, die Gruppe der Behälter (4) ist um diese Achse drehbar, worin die Ausgabe von Lebensmitteln aus einem Behälter (4) in den Mischbecher (2), durch Rotation und Ausrichtung dieses Behälters (4) mit dem Auslass der Ausgabemittel (5) erhalten werden.

7. Küchenmaschine (1) nach jedem der vorherigen Ansprüche, worin diese weiterhin ein steuerbares Tor, das zwischen dem Behälter (4) und einem Auslass des Ausgabemittels (5) angeordnet ist, umfasst, dieses steuerbare Tor kann sich bei Empfang des gennanten Ausgabebefehls öffnen, dadurch wird die gennante Ausgabe von Lebensmitteln in den Mischbecher (2) durch eine im Mischbecher (2) vorgesehene Öffnung, ermöglicht.

8. Küchenmaschine (1) nach jedem der vorherigen Ansprüche, worin der Mischbecher (2) eine Abdeckung umfasst, eine solche Abdeckung beinhaltet die genannte Öffnung und vorzugsweise umfasst die Abdeckung weiterhin einen zu öffenenden Einlass, der die in der Abdeckung gebildete Öffnung abdeckt, und, wenn geöffnet, den Zugang zwischen dem Auslass der Ausgabemittel (5) und der Öffnung in der Abdeckung ermöglicht.

9. Küchenmaschine (1) nach jedem der vorherigen Ansprüche, worin diese weiterhin Heizmittel umfasst, vorzugsweise ist diese in einer Basis des Mischbecher (2) vorgesehen.

10. Küchenmaschine (1) nach jedem der Ansprüche 3-9, worin das besagte Kochprogramm wie folgt initiiert wird:
- nur bei Empfang eines nachfolgenden Befehls durch die Küchenmaschine (1), dieser nachfolgende Befehl bestehend aus einem Befehl zur Einleitung des Kochprogramms, oder
- automatisch.

11. Küchenmaschine (1) nach jedem der vorherigen Ansprüche, worin diese weiterhin Kühlmittel umfasst, die Kühlmittel sind so angeordnet, dass sie jedem der Behälter (4) Kühlung bieten.

12. Küchenmaschine (1) nach jedem der vorherigen Ansprüche, worin diese weiterhin Kommunikationsmittel umfasst, die Kommunikationsmittel sind konfiguriert, um eine Fernmeldung zu empfangen, die den Ausgabebefehl (5) enthält, worin die Kommunikationsmittel vorzugsweise wireless sind, bevorzugt wird vor allem ein lokales drahtloses Netzwerk oder ein zellulares Netzwerk.

13. Verfahren zum Automatisieren eines Kochprogramms in einer Küchenmaschine (1), worin es durch die Küchenmaschine (1) nach einem der vorhergehenden Ansprüche ausgeführt wird und die folgenden Schritte umfasst:
- Ausstellen eines Ausgabebefehls an die Ausgabemittel (5); der besagte Ausgabebefehl behinhaltet Informationen über eine Frist, die auf der Endzeit eines Kockprogramms und die Dauer des besagten Kochprogramms basiert;
- nach Empfang eines solchen Befehls durch die Küchenmaschine (1), und nach Ablauf einer solchen Frist, Ausgabe durch die Ausgabemittel (5) der in dem Behälter (4) enthaltenen Lebensmittel in den Mischbecher (2), durch den Auslass der Ausgabemittel (5) und die Öffnung des Mischbechers (2);
- Initiierung eines Kochprogramms in der Küchenmaschine (1), vorzugsweise umfasst ein solches Kochprogramm die Aktivierung der Mischeinrichtung (3) und/oder der Heizmittel, die im Mischbecher (2) enthalten sind, für vordefinierte Zeiträume, vorzugsweise umfasst die Küchenmaschine (1) einen oder mehrere Behälter (4), jeder Behälter (4) weist eine unterschiedliche Lebensmittelversorgung auf.

## Revendications

1. Machine de cuisine (1) actionnée électriquement et comprenant i) une coupelle de mélange (2), ii) un moyen d'agitation (3) disposé dans la coupelle de mélange (2), iii) au moins un récipient (4) approprié pour contenir des produits alimentaires, iv) un moyen de distribution (5) et un v) un microcontrôleur comprenant un temporisateur,
dans laquelle,
le moyen de distribution (5) et la coupelle de mélange (2) sont tels que les produits alimentaires contenus dans le récipient (4) peuvent être distribués à l'intérieur de la coupelle de mélange (2) sous une commande de distribution reçue par la machine de cuisine (1) ;
la commande de distribution comprend une information sur une limite de temps pendant laquelle la distribution de produits alimentaires à l'intérieur de la coupelle de mélange (2) doit être effectuée selon un programme de cuisson, la machine de cuisine (1) étant configurée pour émettre la commande de distribution lors de l'expiration de ladite limite de temps ; et dans laquelle,
la limite de temps est programmée dans le temporisateur et est calculée par le microcontrôleur en fonction de l'heure de fin du programme de cuisson définie par un utilisateur et de la durée dudit programme de cuisson.

2. Machine de cuisine (1) selon la revendication précédente qui comprend plus d'un récipient (4).

3. Machine de cuisine (1) selon l'une quelconque des revendications précédentes qui est configurée pour, suite à la distribution de produits alimentaires d'un récipient (4) à l'intérieur de la coupelle de mélange (2), initier un programme de cuisson qui comprend de préférence l'activation du moyen d'agitation (3) et/ou d'un moyen de chauffage pour des périodes de temps prédéfinies.

4. Machine de cuisine (1) selon l'une quelconque des revendications 2 et 3, qui est en outre configurée de telle sorte que la distribution de produits alimentaires d'un récipient (4) à l'intérieur de la coupelle de mélange (2) est éloignée dans le temps de la distribution de produits alimentaires d'au moins un autre récipient (4) à l'intérieur de la coupelle de mélange (2).

5. Machine de cuisine (1) selon la revendication précédente dans laquelle un programme de cuisson commence après une première distribution de produits alimentaires d'un récipient (4) à l'intérieur de la coupelle de mélange (2), ledit programme de cuisson comprenant de préférence l'activation du moyen d'agitation (3) et/ou du moyen de chauffage pour des périodes prédéfinies.

6. Machine de cuisine (1) selon l'une quelconque des revendications 4 et 5 dans laquelle le moyen de distribution (5) comprend en outre un axe autour duquel les récipients (4) sont disposés radialement, l'ensemble de récipients (4) pouvant tourner autour dudit axe, la distribution de produits alimentaires d'un récipient (4) à l'intérieur de la coupelle de mélange (2) étant obtenue par rotation et alignement dudit récipient (4) avec la sortie du moyen de distribution (5).

7. Machine de cuisine (1) selon l'une quelconque des revendications précédentes qui comprend en outre une porte commandable disposée entre le récipient (4) et une sortie du moyen de distribution (5), ladite porte commandable pouvant être ouverte sous réception de ladite commande de distribution, de façon à réaliser ladite distribution de produits alimentaires à l'intérieur de la coupelle de mélange (2) à travers une ouverture disposée dans la coupelle de mélange (2).

8. Machine de cuisine (1) selon l'une quelconque des revendications précédentes dans laquelle la coupelle de mélange (2) comprend un couvercle, ce couvercle comportant ladite ouverture et, de préférence, comportant en outre une entrée ouvrable, cette entrée recouvrant l'ouverture formée dans le couvercle et, lorsqu'elle est ouverte, donnant accès entre la sortie du moyen de distribution (5) et l'ouverture du couvercle.

9. Machine de cuisine (1) selon l'une quelconque des revendications précédentes qui comprend en outre un moyen de chauffage, disposé de préférence dans la base de la coupelle de mélange (2).

10. Machine de cuisine (1) selon l'une quelconque des revendications 3 à 9 dans laquelle ledit programme de cuisson est déclenché :
- uniquement sous réception d'une commande subséquente par la machine de cuisine (1), cette commande ultérieure consistant en une commande d'initialisation du programme de cuisson, ou
- automatiquement.

11. Machine de cuisine (1) selon l'une quelconque des revendications précédentes qui comprend en outre un moyen de refroidissement qui est disposé de manière à fournir une réfrigération à chaque récipient (4).

12. Machine de cuisine (1) selon l'une quelconque des revendications précédentes qui comprend en outre un moyen de communication, le moyen de communication étant configuré pour recevoir un message à distance contenant la commande de distribution (5), le moyen de communication étant de préférence sans fil, plus préférentiellement un réseau local sans fil ou un réseau cellulaire.

13. Procédé d'automatisation d'un programme de cuisson dans une machine de cuisine (1), lequel est mis en marche par la machine de cuisine (1) de l'une quelconque des revendications précédentes et qui comprend les étapes suivantes :
- Emission d'une commande de distribution au moyen de distribution (5) ; ladite commande de distribution comprenant une information sur une limite de temps en fonction de l'heure de fin d'un programme de cuisson et de la durée dudit programme de cuisson,
- sous réception de ladite commande par la machine de cuisine (1), et lors de l'expiration de ladite limite de temps, la distribution, par le moyen de distribution (5), des produits alimentaires contenus dans le récipient (4) à l'intérieur de la coupelle de mélange (2), à travers la sortie du moyen de distribution (5) et l'ouverture de la coupelle de mélange (2),
- mise en marche d'un programme de cuisson dans la machine de cuisine (1), ledit programme de cuisson comprenant de préférence l'activation du moyen d'agitation (3) et/ou du moyen de chauffage compris dans la coupelle de mélange (2), pour des périodes de temps prédéfinies,
de préférence, la machine de cuisine (1) comprenant plus d'un récipient (4), chaque récipient (4) contenant un produit alimentaire différent.
